# EUROPÄISCHE PATENTSCHRIFT

(11) **EP 1 544 623 B1**
(45) Veröffentlichungstag und Bekanntmachung des Hinweises auf die Patenterteilung: **09.01.2008**
(21) Anmeldenummer: 04027362.5
(22) Anmeldetag: 18.11.2004
(51) Int. Cl.: G01P 5/00, G01P 1/02, E21F 1/00, G01P 5/06

(54) **Vorrichtung und Verfahren zur Bestimmung der Strömungsgeschwindigkeit**
Device and method for determining flow velocity
Dispositif et procédé pour la détermination de la vitesse d'écoulement

(30) Priorität: 17.12.2003 DE 10359540
(43) Veröffentlichungstag der Anmeldung: 22.06.2005
(73) Patentinhaber: TLT-Turbo GmbH, 66482 Zweibrücken (DE)
(72) Erfinder: Kosack, Christian, 66851 Horbach (DE)
(74) Vertreter: Radünz, Ingo

(56) Entgegenhaltungen:
- CH-A- 313 592
- DE-A1- 2 058 587
- DE-A1- 19 724 351
- DE-A1- 19 928 698
- UNWIN I D: "USE OF FIXED AIRFLOW MONITORS IN COAL MINES" MEASUREMENT AND CONTROL, INSTITUTE OF MEASUREMENT AND CONTROL. LONDON, GB, Bd. 23, Nr. 9, 1. November 1990 (1990-11-01), Seiten 278-283, XP000170988 ISSN: 0020-2940
- SHAYESTEH M V ET AL: "Microcomputer-controlled traverse gear for three-dimensional flow explorations" JOURNAL OF PHYSICS E (SCIENTIFIC INSTRUMENTS) UK, Bd. 20, Nr. 3, März 1987 (1987-03), Seiten 320-322, XP001205966 ISSN: 0022-3735

## Beschreibung

Die Erfindung betrifft eine Vorrichtung und ein Verfahren zur Bestimmung der Strömungsgeschwindigkeit in der Tunnelröhre eines belüfteten Tunnels mit den Merkmalen des Oberbegriffes der Ansprüche 1 und 9.

Bevor eine fertiggestellte Belüftungsanlage eines Tunnels an den Betreiber oder den Kunden übergeben werden soll, wird eine so genannte Abnahmemessung durchgeführt. Im Rahmen einer solchen Abnahmemessung, die der Überprüfung der gesamten Anlage dient, wird auch das Strömungsprofil in der Tunnelröhre gemessen. Mit Hilfe einer solchen Messung wird nachgewiesen, dass im gesamten Tunnelquerschnitt ein Luftaustausch erfolgt und sich keine Konzentrationsnischen bilden, die besonders im Brandfall schädlich sind. Es handelt sich bei solchen Konzentrationsnischen um Bereiche, in denen die Strömungsgeschwindigkeit gleich Null ist oder aufgrund von Rückströmungen kein Luftaustausch erfolgt. Zum anderen wird mit der Bestimmung der Strömungsgeschwindigkeit dem Kunden der Beweis erbracht, dass die Anforderung mit dem vertraglich festgelegten Energiebedarf erfüllt wird. Außerdem können mit einem solchen Messsystem die stationären Messeinrichtungen zur Messung der Strömungsgeschwindigkeit kontrolliert und Untersuchungen zur Optimierung der Anlage durchgeführt werden.

In der DE 20 48 587 A1 ist eine Messeinrichtung zur Bestimmung der Strömungsgeschwindigkeit in belüfteten Kanälen in Bergwerken beschrieben, bei der ein Hebelsystem verwendet wird. Dieses Hebelsystem besteht aus einer über den Kanalquerschnitt ausgespannten Gliederschere. Die Messung erfolgt in einer einzigen Messebene in den Kreuzungspunkten der Gliederschere mit Hilfe eines als Prandl'sches Staurohr ausgebildeten Strömungsmessers, der durch eine Öffnung in der Wand des Kanals in den Kanalquerschnitt eingeführt wird.

In der DE 197 24 351 A1 ist eine Vorrichtung zum Messen des Geschwindigkeitsprofils eines in einer Rohrleitung strömenden Fluids beschrieben. In dem besonderen Fall ist die Rohrleitung eine Hochdruck-Gas-Pipeline, die im Vergleich zu einer Tunnelröhre eine geringe Weite sowie einen kreisrunden Querschnitt aufweist. Bei der bekannten Vorrichtung wird die Messsonde mit Hilfe von Schrittmotoren bewegt und kann auf jeden beliebigen Punkt im Rohrquerschnitt geführt werden. Dies wird durch eine Drehbewegung eines Innenrohres und eine Längsverschiebung eines Schlittens entlang einer Linearführung erreicht.

In der DE 199 28 698 A1 ist eine Vorrichtung zur Messung der Geschwindigkeit von Partikeln in einer Strömung beschrieben. Die Messeinrichtung, bestehend aus Kamera, Optik und Lichtquelle, ist auf zwei positionsveränderbaren, senkrecht zueinander stehenden Balken angeordnet und ist mit Ultraschallsendern ausgerüstet, die mit ortsfesten Ultraschallempfängern zusammen wirken.

In der Zeitschrift Journal of Physics E (Scientific Instruments) 20 (1987), Seiten 320 - 322, ist eine Vorrichtung zur Untersuchung der Strömungsgeschwindigkeit in drei Dimensionen beschrieben. Dabei wird ein Anemometer verwendet, das auf einer dreh- und kippbaren Sonde angeordnet ist, die über ein mikrocomputergesteuertes Getriebe bewegt wird.

Aus der CH 313 592 A ist es bekannt, Messgeräte auf einem Messfahrzeug zu montieren, um einen mobilen Einsatz zu ermöglichen. Das bekannte Messfahrzeug ist mit Ultraschall-Sendern und -Empfängern ausgerüstet, um die Profillinien einer Tunnelröhre zu bestimmen.

Der Erfindung liegt die Aufgabe zugrunde, ein einfaches, sicheres und vielfältig einsetzbares Messsystem zur Bestimmung der Strömungsgeschwindigkeit innerhalb der Tunnelröhre eines Tunnels zu schaffen, das einen einfachen und schnellen Transport von einem Einsatzort zu einem anderen gestattet.

Die Aufgabe wird mit einer gattungsgemäßen Vorrichtung durch die kennzeichnenden Merkmale des Anspruches 1 und bei einem gattungsgemäßen Verfahren durch die kennzeichnenden Merkmale des Anspruches 9 gelöst. Vorteilhafte Ausgestaltungen der Erfindung sind Gegenstand der Unteransprüche.

Ein Ausführungsbeispiel der Erfindung ist in der Zeichnung dargestellt und wird im Folgenden näher erläutert. Es zeigen:
Fig. 1 in Seitenansicht einen Wagen mit einer Messvorrichtung nach der Erfindung und
Fig. 2 die Ansicht von hinten auf den Wagen nach Fig. 1 innerhalb einer Tunnelröhre.

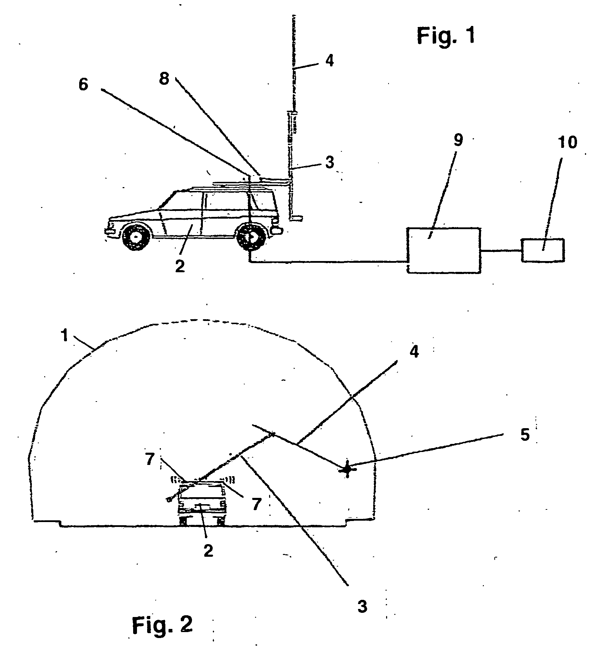

Von einem Tunnel, beispielsweise einem Straßentunnel, ist in Fig. 2 nur der Umriss der Tunnelröhre 1 mit Sohle, Seitenwänden und Decke zu erkennen. Der Tunnel ist belüftet mit Hilfe von Ventilatoren. Zur Überprüfung des Belüftungssystems auf Tunnelsicherheit wird vor der Inbetriebnahme des Tunnels die Strömungs- oder Windgeschwindigkeit innerhalb mehrerer hintereinander liegender Querschnittsebenen der Tunnelröhre 1 gemessen.

Zur Messung der Strömungsgeschwindigkeit dient ein auf der Sohle der Tunnelröhre 1 in Längsrichtung des Tunnels verfahrbarer Wagen 2, der mit einem eigenen Antrieb versehen ist. Der Wagen 2 besteht vorzugsweise aus einem handelsüblichen Personenkraftfahrzeug, das einen Dachgepäckträger trägt. Auf dem Dachgepäckträger des Wagens 2 ist ein Hebelsystem montiert.

Das Hebelsystem besteht aus einem ersten, längeren, zweiarmigen Hebel 3, der um einen Drehpunkt schwenkbar auf dem Dachgepäckträger des Wagens 2 montiert ist. Mit dem ersten Hebel 3 ist ein zweiter, kürzerer, zweiarmiger Hebel 4 verbunden, der um einen auf dem ersten Hebel 3 liegenden Drehpunkt schwenkbar ist. Beide Hebel 3, 4 sind mit jeweils einem nicht gezeigten Schrittmotor in Verbindung mit einem dreistufigen Planetengetriebe versehen.

Der zweite Hebel 4 weist zwei ungleich lange Hebelarme auf. Auf dem Ende des längeren Hebelarmes des Hebels 4, der im Betriebszustand der Tunnelröhre 1 zugewandt ist, ist ein Anemometer 5 montiert. Das Anemometer 5 ist vorzugsweise ein bekanntes Flügelrad- oder Schalenkreuzanemometer und besteht aus einem horizontal rotierenden und mit offenen Halbkugeln oder Flügeln versehenen Windrad, das von der in der Tunnelröhre 1 herrschenden Strömung in Rotation versetzt wird. Die Drehzahl des Anemometers 5 ist proportional zu der an der betreffenden Position herrschenden Strömungsgeschwindigkeit. Durch ein Verschwenken der Hebel 3, 4 des Hebelsystems kann das Anemometer 5 in verschiedene Positionen innerhalb einer Querschnittsebene der Tunnelröhre 1 gebracht werden.

Das Anemometer 5 ist mit einem nicht gezeigten Strömungsrichtungsanzeiger kombiniert. Der Strömungsrichtungsanzeiger besteht in seiner einfachsten Ausführungsform aus einer Windfahne.

Zusätzlich zu dem auf dem zweiten Hebel 4 angeordneten Anemometer 5 ist auf dem Wagen 2 ein feststehendes Anemometer 6 befestigt, das ebenfalls ein Flügelrad- oder Schalenkreuzanemometer ist.

Auf beiden Längsseiten des Wagens 2 ist je ein Ultraschallsensor 7 angeordnet. Die Ultraschallsensoren 7 sind so ausgebildet, dass diese den Abstand des Wagens 2 von der benachbarten Wandung der Tunnelröhre 1 bestimmen können.

Die Schrittmotoren der Hebel 3, 4 sind an eine Steuerung 8 angeschlossen, die mit einem Steuergerät 9 in Verbindung steht. An das Steuergerät 9 ist ein Rechner 10, zum Beispiel ein Notebook angeschlossen. Die Stromversorgung für die Schrittmotoren der Hebel 3, 4 und für das Steuersystem erfolgt über das Bordnetz des als verfahrbarer Wagen 2 dienenden Personenkraftfahrzeuges.

Der Wagen 2 wird innerhalb des Tunnels auf der Sohle der Tunnelröhre 1 mittig in eine bestimmte Position gefahren. Nach der Positionierung des Wagens 2 wird der Abstand des Wagens 2 von der Wandung der Tunnelröhre 1 mit Hilfe der Ultraschallsensoren 7 ermittelt. Danach kann die Messung der Strömungsgeschwindigkeit mit Hilfe der Anemometer 5, 6 in verschiedenen Punkten innerhalb einer Querschnittsebene der Tunnelröhre 1 vorgenommen werden. Durch eine Verstellung der Hebel 3, 4 wird das auf dem zweiten Hebel 4 angeordnete Anemometer 5 in verschiedene Punkte innerhalb der Querschnittsebene verbracht. Dabei können die Messpunkte einzeln angefahren werden, oder die Verstellung des Anemometers 5 kann von dem Steuergerät 9 aus nach einem Programm mit zuvor eingegebenen Koordinaten gestartet werden. Um zeitliche Schwankungen der Strömungsgeschwindigkeit in der Tunnelröhre 1 auszugleichen, wird mit jedem von dem verstellbaren Anemometer 5 ermittelten Messwert ein Referenzwert von dem feststehenden Anemometer 6 aufgenommen. Außerdem wird die Strömungsrichtung bestimmt. Die ermittelten Messwerte werden in einem Rechner 10 zur Erstellung eines Strömungsprofils verarbeitet, das die Verteilung der Strömungsgeschwindigkeit über den Tunnelquerschnitt wiedergibt. Ist eine Querschnittsebene gemessen worden, wird der Wagen 2 innerhalb der Tunnelröhre 1 in die folgende Querschnittsebene gefahren, und es wird eine erneute Messung der Strömungsgeschwindigkeit in der zuvor beschriebenen Weise vorgenommen.

Mit Hilfe des Personenkraftfahrzeuges ist ein einfacher und vor allem schneller Transport der Messvorrichtung von einem Einsatzort zum nächsten möglich. Das das Anemometer 5 aufnehmende Hebelsystem kann für verschiedene Tunnelprofile eingesetzt werden. Die Messvorrichtung kann dank der Ausbildung als Flügelrad- oder Schalenkreuzanemometer Strömungsgeschwindigkeiten von 0,2 bis 20 m/s aufnehmen, in einem Temperaturbereich von -20 °C bis +30 °C eingesetzt werden und je nach Auslegung des Hebelsystems eine Messebene von 9 m Breite und 6,5 m Höhe erfassen. Die Erfassung einer Messebene kann innerhalb eines Zeitraumes von 10 min erfolgen, wobei das Messsystem von einer Person bedient werden kann.

## Patentansprüche

1. Vorrichtung zur Bestimmung der Strömungsgeschwindigkeit in der Tunnelröhre (1) eines belüfteten Tunnels mit Hilfe eines Hebelsystems (3, 4), das ein Anemometer (5) zur Bestimmung der Strömungsgeschwindigkeit trägt und das quer zur Längsrichtung des Tunnels über den Querschnitt der Tunnelröhre (1) verstellbar ist, **dadurch gekennzeichnet, dass** das Hebelsystem (3, 4) aus einem ersten Hebel (3), der gelenkig an einem Wagen (2) angebracht ist, und aus einem zweiten Hebel (4) besteht, der gelenkig mit dem ersten Hebel (3) verbunden ist, dass am freiem Ende des zweiten Hebels (4) das Anemometer (5) und ein Strömungsrichtungsanzeiger angebracht sind und dass das Hebelsystem auf dem in Längsrichtung des Tunnels verfahrbaren Wagen (2) angeordnet ist.

2. Vorrichtung nach Anspruch 1, **dadurch gekennzeichnet, dass** das Anemometer (5) als Flügelrad- oder Schalenkreuzanemometer ausgebildet ist.

3. Vorrichtung nach Anspruch 1 oder 2, **dadurch gekennzeichnet, dass** die Hebel (3, 4) mit Schrittmotoren versehen sind.

4. Vorrichtung nach einem der Ansprüche 1 bis 3, **dadurch gekennzeichnet, dass** die Schrittmotoren des Hebelsystems (3, 4) an die bordeigene Energieversorgung des Wagens (2) angeschlossen sind.

5. Vorrichtung nach einem der Ansprüche 1 bis 4, **dadurch gekennzeichnet, dass** ein Steuergerät (9) für die Steuerung an die bordeigene Energieversorgung des Wagens (2) angeschlossen ist.

6. Vorrichtung nach einem der Ansprüche 1 bis 5, **dadurch gekennzeichnet, dass** ein weiteres Anemometer (6) feststehend auf dem Wagen (2) angeordnet ist.

7. Vorrichtung nach einem der Ansprüche 1 bis 6, **dadurch gekennzeichnet, dass** je ein Ultraschallsensor (7) auf jeder Längsseite des Wagens (2) zur Bestimmung des Abstandes des Wagens (2) von der benachbarten Wandung der Tunnelröhre (1) angeordnet ist.

8. Vorrichtung nach einem der Ansprüche 1 bis 7, **dadurch gekennzeichnet, dass** das Hebelsystem (3, 4) mit dem Steuergerät (9) und einem Rechner (10) verbunden ist.

9. Verfahren zur Bestimmung der Strömungsgeschwindigkeit in der Tunnelröhre (1) eines belüfteten Tunnels mit Hilfe einer Vorrichtung nach den Ansprüchen 1 bis 8, **dadurch gekennzeichnet, dass** durch ein Verfahren des Wagens (2) das Anemometer (5) nacheinander in mehrere mit Abstand hintereinander liegende Querschnittsebenen verbracht wird und dass innerhalb jeder Querschnittsebene an mehreren vorbestimmten Messpunkten mit dem Anemometer (5) die Strömungsgeschwindigkeit bestimmt wird.

10. Verfahren nach Anspruch 9, **dadurch gekennzeichnet, dass** zu jeder Messung an einem Messpunkt innerhalb einer Querschnittsebene außerdem die Strömungsgeschwindigkeit mit einem feststehenden Anemometer (6) an einem feststehenden Messpunkt innerhalb derselben Querschnittsebene als Referenzwert bestimmt wird.

11. Verfahren nach Anspruch 9 oder 10, **dadurch gekennzeichnet, dass** der Wagen (2) mittig in der Tunnelröhre (1) positioniert wird und dass der Abstand des Wagens (2) von der Wandung der Tunnelröhre (1) mit Hilfe von Ultraschallsensoren (7) bestimmt wird.

12. Verfahren nach einem der Ansprüche 9 bis 11, **dadurch gekennzeichnet, dass** die Messpunkte in einer Querschnittsebene einzeln angefahren werden.

13. Verfahren nach einem der Ansprüche 9 bis 11, **dadurch gekennzeichnet, dass** die Messpunkte in einer Querschnittsebene nach einem Programm mit zuvor eingegebenen Koordinaten angefahren werden.

## Claims

1. Device for determining the flow velocity in tunnel tube (1) of a vented tunnel with the help of a lever system (3, 4) which carries an anemometer (5) for determining the flow velocity and which is adjustable in cross sense to the longitudinal direction of the tunnel over the cross-section of tunnel tube (1), **characterized in that** the lever system (3, 4) consists of a first lever (3) which is hinged at a carriage (2), and of a second lever (4) which is hinged at the first lever (3), **in that** the anemometer (5) and a flow sense indicator are arranged at the free end of the second lever (4) and **in that** the lever system is located on the carriage (2) which can be moved in longitudinal direction of the tunnel.

2. Device according to claim 1, **characterized in that** the anemometer (5) is designed as a vane-type or cup anemometer.

3. Device according to claim 1 or 2, **characterized in that** the levers (3, 4) are provided with stepping motors.

4. Device according to one of claims 1 to 3, **characterized in that** the stepping motors of the lever system (3, 4) are connected with the on-board energy supply of the carriage (2).

5. Device according to one of claims 1 to 4, **characterized in that** a control unit (9) for the control is connected with the on-board energy supply of the carriage (2).

6. Device according to one of claims 1 to 5, **characterized in that** another anemometer (6) is permanently arranged on the carriage (2).

7. Device according to one of claims 1 to 6, **characterized in that** one ultrasonic sensor (7) each is arranged on each longitudinal side of the carriage (2) to determine the distance of the carriage (2) from the neighboring wall of tunnel tube (1).

8. Device according to one of claims 1 to 7, **characterized in that** the lever system (3, 4) is connected with the control unit (9) and a computer (10).

9. Process for determining the flow velocity in tunnel tube (1) of a vented tunnel with the help of a device according to claims 1 to 8, **characterized in that**, through movement of carriage (2), anemometer (5) is in succession brought to several cross-sectional levels lying with distance one behind the other and **in that** within each cross-sectional level the flow velocity is determined with anemometer (5) at several predetermined measuring points.

10. Process according to claim 9, **characterized in that**, in addition to each measurement at a measuring point within a cross-sectional level, the flow velocity is determined as reference value with a stationary anemometer (6) at a permanent measuring point within the same cross-sectional level.

11. Process according to claim 9 or 10, **characterized in that** the carriage (2) is centrally positioned in tunnel tube (1) and **in that** the distance of the carriage (2) from the wall of tunnel tube (1) is determined with the help of ultrasonic sensors (7).

12. Process according to one of claims 9 to 11, **characterized in that** the measuring points at one cross-sectional level can individually be approached.

13. Process according to one of claims 9 to 11, **characterized in that** the measuring points in one cross-sectional level are approached according to a program with previously input coordinates.

## Revendications

1. Dispositif pour déterminer la vitesse d'écoulement dans le tube (1) d'un tunnel ventilé à l'aide d'un système à leviers (3, 4) doté d'un anémomètre (5) pour déterminer la vitesse d'écoulement et pouvant être déplacé en travers de la longueur du tunnel par la section transversale du tube du tunnel (1), **caractérisé en ce que** le système à leviers (3, 4) se compose d'un premier levier (3), s'articulant sur une voiture (2), et d'un second levier (4), s'articulant sur le premier levier, **caractérisé en ce que** l'anémomètre (5) et un indicateur de sens d'écoulement sont montés au niveau de l'extrémité libre du second levier (4) et **en ce que** le système à leviers est positionné sur la voiture(2) pouvant se déplacer dans le sens de la longueur du tunnel.

2. Dispositif selon la revendication 1, **caractérisé en ce que** l'anémomètre (5) fonctionne comme anémomètre à roue à ailettes ou comme anémomètre à croix.

3. Dispositif selon l'une des revendications 1 ou 2, **caractérisé en ce que** les leviers (3, 4) sont pourvus de moteurs pas à pas.

4. Dispositif selon l'une des revendications 1 à 3, **caractérisé en ce que** les moteurs pas à pas du système à leviers (3, 4) sont reliés à l'alimentation en énergie embarquée de la voiture (2).

5. Dispositif selon l'une des revendications 1 à 4, **caractérisé en ce qu'**un appareil de commande (9) est relié à l'alimentation en énergie embarquée de la voiture (2) afin de commander le dispositif.

6. Dispositif selon l'une des revendications 1 à 5, **caractérisé en ce qu'**un autre anémomètre (6) est positionné de manière fixe au niveau de la voiture (2).

7. Dispositif selon l'une des revendications 1 à 6, **caractérisé en ce qu'**un capteur à ultrasons (7) est positionné sur chaque côté long de la voiture (2) pour déterminer la distance entre la voiture (2) et la paroi voisine du tube du tunnel (1).

8. Dispositif selon l'une des revendications 1 à 7, **caractérisé en ce que** le système à levier (3, 4) est relié à l'appareil de commande (9) ainsi qu'à un ordinateur (10) .

9. Dispositif pour déterminer la vitesse d'écoulement dans le tube (1) d'un tunnel ventilé à l'aide d'un dispositif selon les revendications 1 à 8, **caractérisé en ce que**, sous l'effet du déplacement de la voiture (2), l'anémomètre (5) est transporté d'un plan transversal à un autre, espacés et successifs, et **en ce que** la vitesse d'écoulement est déterminée grâce à l'anémomètre (5) à l'intérieur de chaque plan transversal, au niveau de plusieurs points de mesure préalablement déterminés.

10. Dispositif selon la revendication 9, **caractérisé en ce que**, pour chaque mesure au niveau d'un point de mesure à l'intérieur d'un plan transversal, la vitesse d'écoulement est en outre déterminée comme valeur de référence à l'aide d'un anémomètre fixe (6) au niveau d'un point de mesure fixe à l'intérieur du même plan transversal.

11. Dispositif selon l'une des revendications 9 ou 10, **caractérisé en ce que** la voiture (2) est positionnée au centre du tube du tunnel (1) et la distance entre la voiture (2) et la paroi du tube du tunnel (1) est déterminée à l'aide de capteurs à ultrasons (7).

12. Dispositif selon l'une des revendications 9 à 11, **caractérisé en ce que** les points de mesure dans un plan transversal sont placés séparément.

13. Dispositif selon l'une des revendications 9 à 11, **caractérisé en ce que** les points de mesure dans un plan transversal sont placés selon un programme de coordonnées préalablement enregistrées.
